# EUROPÄISCHE PATENTANMELDUNG

(11) **EP 1 731 990 A2**
(43) Veröffentlichungstag der Anmeldung: **13.12.2006**
(21) Anmeldenummer: 06009764.9
(22) Anmeldetag: 11.05.2006
(51) Int. Cl.: G06F 3/02, H01H 13/70

(54) **Tastatur mit einem Tastaturgehäuse und einer Vielzahl von Tasten**

(30) Priorität: 10.06.2005 DE 102005026894
(71) Anmelder: Fujitsu Siemens Computers GmbH, 80807 München (DE)
(72) Erfinder: Gut, Bernhard, 86551 Aichach (DE)
(74) Vertreter: Epping - Hermann - Fischer

(57) **Zusammenfassung**

Die Erfindung betrifft eine Tastatur mit einem Tastaturgehäuse und einer Vielzahl von Tasten aufweisend jeweils einen Drucktaster und jeweils eine Tastenkappe, wobei wenigstens eine Taste (16) eine längliche Tastenkappe (18) aufweist, die über einen Bügel (19) mit dem Tastaturgehäuse (17) verbunden ist. Die Tastatur ist dadurch gekennzeichnet, dass ein sich in Längsrichtung der länglichen Taste (16) erstreckender erster Bügelabschnitt (19a) in wenigstens zwei ersten Lagern (20) des Tastaturgehäuses (17) schwenkbar und spielfrei gelagert ist und zwei im wesentlichen dazu senkrecht abgebogene zweite Bügelabschnitte (19b) in zweiten Lagern (23) der Tastenkappe (18) vorgespannt aufgenommen sind.

## Beschreibung

Die Erfindung betrifft eine Tastatur mit einem Tastaturgehäuse und einer Vielzahl von Tasten aufweisend jeweils einen Drucktaster und jeweils eine Tastenkappe, wobei wenigstens eine Taste eine längliche Tastenkappe aufweist, die über einen Bügel mit dem Tastaturgehäuse verbunden ist.

Tastaturen mit länglichen Tastenkappen sind vielfach bekannt. Beispielsweise weisen praktisch alle Computertastaturen eine längliche, bevorzugt mit einem Daumen bedienbare Leertaste zur Eingabe von Leerzeichen auf.

Anders als andere Tastenkappen sind die Tastenkappen länglicher Tasten oft mit einem Bügel mit einer Grundplatte oder dem Gehäuse der Tastatur verbunden. Der Bügel dient dazu, bei exzentrischer Betätigung der Taste einen Teil der Betätigungskraft auf das gegenüberliegende Ende der Tastenkappe zu übertragen und somit ein Kippen oder Verklemmen des Tastenkörpers zu verhindern.

Eine Tastatur gemäß dem Gattungsbegriff ist beispielsweise aus der DE 199 400 51 C1 bekannt. Bei der Montage dieser Tastatur ist ein Schwenkbügel beidseitig gegen Längsverschiebung begrenzt und wird durch zwei Auflagerippen in senkrechter Richtung so positioniert, dass seine Lage definiert derjenigen der gedrückten Mehrfachtaste entspricht. Wird der komplette Tastensatz in das Gehäuse eingesetzt und bis zum Endanschlag gedrückt, so rastet der Schwenkbügel in Einschnappöffnungen der Mehrfachtaste ein und stellt damit die Funktion her.

Bei Tastaturen gemäß dem Stand der Technik ist es nachteilig, dass zwischen dem Bügel und den vorhandenen Auflageelementen ein Toleranzspielraum nötig ist, um eine automatische Fertigung der Tastaturen zu gewährleisten. Bedingt durch das freie Spiel zwischen Bügel und Auflagen kommt es zu störenden Klappergeräuschen, die durch die Anwendung von Schmierstoffen gemindert werden.

Aufgabe der Erfindung ist es daher, eine verbesserte Tastatur zu beschreiben, die eine automatische Montage der Tastenkappen erlaubt. Dabei sollen bei einer Betätigung von länglichen Tastenkappen keine Klappergeräusche entstehen.

Die zugrunde liegende Aufgabe wird durch eine Tastatur der eingangs genannten Art gelöst, die dadurch gekennzeichnet ist, dass ein sich in Längsrichtung der länglichen Taste erstreckender erster Bügelabschnitt in wenigstens zwei ersten Lagern des Tastaturgehäuses schwenkbar und spielfrei gelagert ist und zwei im wesentlichen dazu senkrecht abgebogene zweite Bügelabschnitte in zweiten Lagern der Tastenkappe vorgespannt aufgenommen sind.

Erfindungsgemäß wird ein U-förmiger Bügel zur Verbindung einer länglichen Tastenkappe mit dem Tastaturgehäuse eingesetzt. Der längliche Bügel ist dabei sowohl in ersten Lagern des Tastaturgehäuses als auch im zweiten Lager der Tastenkappe spielfrei gelagert. Dies wird in später beschriebenen Ausführungsbeispielen zum Einen durch ein federndes Gehäuseteil und zum Anderen durch die Vorspannung der Schenkel des U-förmigen Bügels erreicht. Da der Bügel somit spielfrei sowohl an den ersten als auch den zweiten Lagern anliegt, entstehen keine Klappergeräusche und eine aufwendige zusätzliche Schmierung des Bügels kann entfallen.

Durch die U-förmige Gestalt des Bügels ergibt sich als zusätzlicher Vorteil eine einfachere Herstellung des Bügels. Während die Schwenkbügel gemäß dem Stand der Technik an vier Stellen abgebogen sind, benötigt der Bügel der gegenwärtigen Erfindung nur zwei Abbiegestellen.

In einer ersten Ausgestaltung der Erfindung weisen die Kerben zur Aufnahme der zweiten Bügelabschnitte ein balliges Profil auf, sodass die zweiten Bügelabschnitte an wenigstens einem Punkt stets die Kerben berühren. Alternativ können auch Kerben verwendet werden, die konisch zulaufen, sodass die zweiten Bügelabschnitte an wenigstens zwei Punkten stets die Kerben berühren.

Weitere Einzelheiten und Ausgestaltungen der Erfindung sind in den Unteransprüchen angegeben.

Die Erfindung wird nachfolgend an Ausführungsbeispielen anhand der Zeichnungen näher erläutert. In den Zeichnungen zeigen:
Figur 1 eine Tastatur gemäß dem Stand der Technik,
Figur 2 eine längliche Taste, bestehend aus einer Grundplatte und einer Tastenkappe, die über einen Bügel miteinander verbunden sind,
Figur 3 einen vergrößerten Querschnitt durch die Taste der Figur 2,
Figur 4 einen vergrößerten Längsschnitt durch die Tastenkappe der Figur 2, in dem eine Kerbe mit einem konischen Profil dargestellt ist,
Figur 5 einen vergrößerten Längsschnitt durch die Tastenkappe der Figur 2, in dem eine Kerbe mit parallelen Kerbenwänden dargestellt ist.

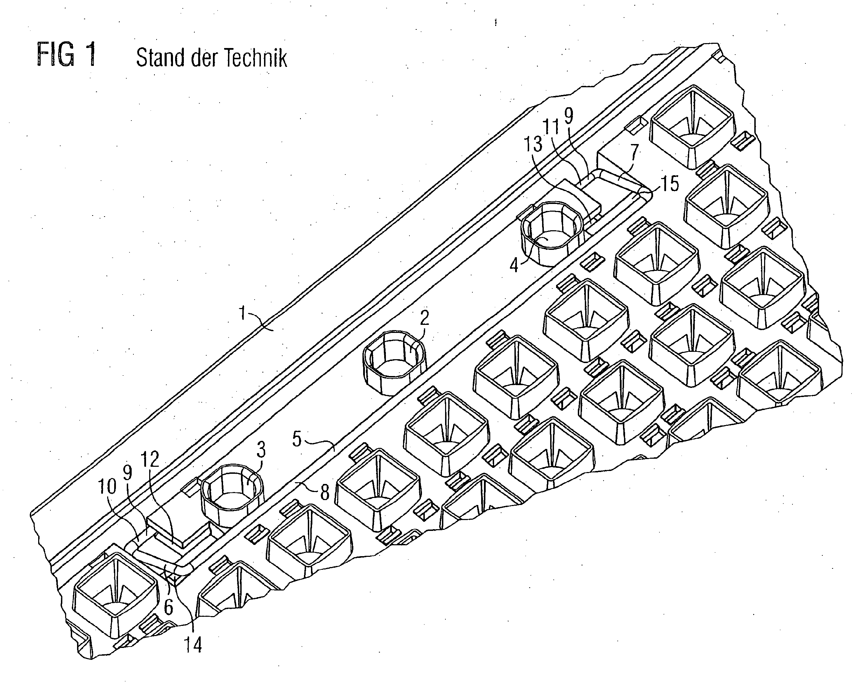

In Figur 1 ist ein Tastaturgehäuse 1 für ein Tastenfeld dargestellt, das eine Leertaste enthalten soll, die als sogenannte Mehrfachtaste ausgeführt ist. Zur Aufnahme von einem mittleren und zwei seitlichen Stößeln dieser Mehrfachtaste sind im Tastaturgehäuse 1 drei Gehäuseschächte 2, 3 und 4 vorgesehen, in denen die vom langgestreckten Tastenkörper (in Figur 1 nicht dargestellt) senkrecht nach unten abstehenden Stößel axial geführt werden und zumindest der mittlere der Stößel mit seinem Ende auf ein Federelement trifft.

Zum Verhindern des Kippensdes langgestreckten Drucktastenkörpers ist ein Schwenkbügel 5 vorgesehen, der zwei zur Längsrichtung parallel verlaufende, durch Verbindungselemente 6 und 7 in festem Abstand zueinander gehaltene Bügelachsen 8 und 9 aufweist, von denen die erste Bügelachse 8 in Lagerelementen am Tastenkörper gelagert ist und die zweite Bügelachse 9 aus zwei Achsstutzen 10 und 11 besteht, die in zwei seitlichen, jeweils als horizontale Parallelgleitführungen ausgebildeten Aufnahmeelementen 12 beziehungsweise 13 gelagert sind. Die beiden jeweils zur Lagerung eines Achsstutzens 10 beziehungsweise 11 des Schwenkbügels 5 vorgesehenen Aufnahmeelemente 12 und 13 sind so gestaltet, dass der Schwenkbügel 5 in seiner Bewegungsfähigkeit in Längsrichtung beidseitig begrenzt ist. Oben auf dem Tastaturgehäuse 1 sind zwei Auflagerippen 14 und 15 zum Auflegen des Schwenkbügels 5 vorgesehen, die so positioniert und in ihrer Höhe so bemessen sind, dass die Lage des Schwenkbügels 5 bei Aufliegen seiner Lage bei gedrückter Mehrfachtaste entspricht. Die beiden Auflagerippen 14 und 15 sind so oben auf dem Tastaturgehäuse 1 angeordnet, dass die beiden Verbindungselemente 6 und 7 des Schwenkbügels 5 an in der Nähe der ersten Bügelachse 8 liegenden Stellen auf ihnen zum Aufliegen kommen.

Zwischen den Achsstutzen 10 beziehungsweise 11 und den Aufnahmeelementen 12 beziehungsweise 13 besteht in vertikaler Richtung ein Toleranzspielraum, sodass beim Betätigen der Mehrfachtaste und damit dem Herunterdrücken des Schwenkbügels 5 ein klapperndes Geräusch entsteht. Um die Geräuschentwicklung zu mindern, werden die Aufnahmeelemente 12 und 13 üblicherweise gefettet.

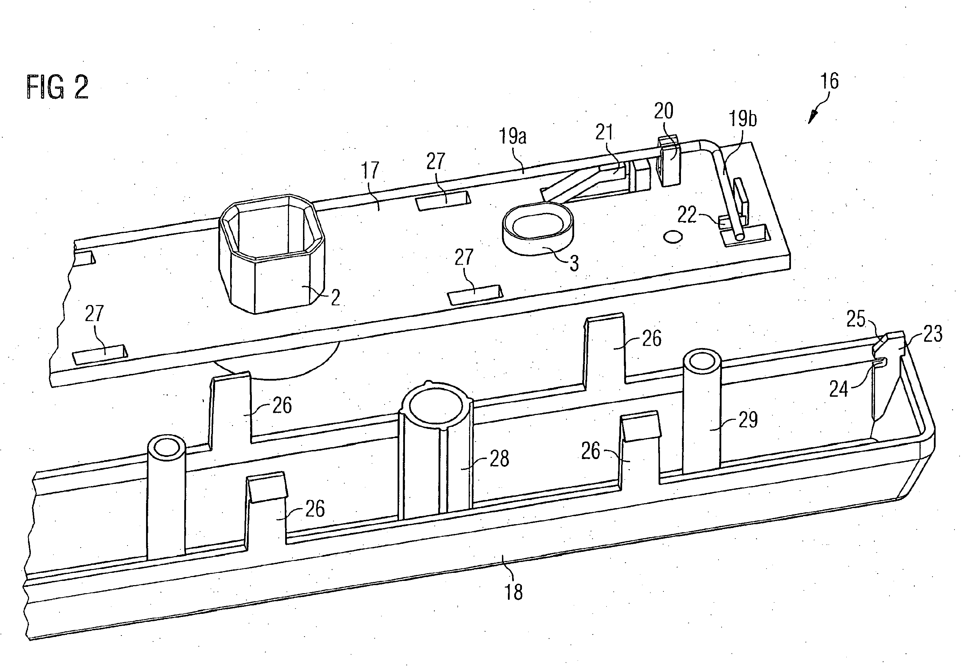

Figur 2 zeigt eine längliche Taste 16, bestehend aus einer Grundplatte 17 und einer Tastenkappe 18, In der gezeigten Darstellung ist ein erfindungsgemäß geformter Bügel 19 mit der Grundplatte 17 verbunden. Der Bügel 19 besteht aus einem sich in Längsrichtung der länglichen Taste 16 erstreckenden ersten Bügelabschnitt 19a und zwei im wesentlichen dazu senkrecht abgebogenen zweiten Bügelabschnitt 19b, von denen jedoch nur einer in Figur 2 dargestellt ist. Der erste Bügelabschnitt 19a ist in zwei Lagern 20, von denen in der Figur 2 nur eines erkennbar ist, gelagert, wobei ein federndes Gehäuseteil 21 den ersten Bügelabschnitt 19a gegen Gegenlager des ersten Lagers 20 drückt. Der zweite Bügelabschnitt 19b liegt auf einem Auflager 22 so auf, wie dies beispielsweise bei der Montage der Tastenkappe 18 oder bei einem Betätigen der fertigen Taste 16 der Fall wäre.

Die Tastenkappe 18 weist zweite Lager 23 auf, die eine Kerbe 24 sowie eine Abschrägung 25 umfassen. Zur Montage der Tastenkappe 18 auf der Grundplatte 17 wird die Tastenkappe 18 gegenüber der Darstellung der Figur 2 um 180 Grad gedreht und von oben auf die Grundplatte 17 gedrückt. Durch die Abschrägung 25 wird der zweite Bügelabschnitt 19b zunächst nach innen gedrückt, bis der zweite Bügelabschnitt 19b in der Kerbe 24 verrastet. Gleichzeitig werden Stößel 28 und 29 in Gehäuseschächte 2 und 3 eingeführt und Rastelemente 26 verrasten mit Gegenrastelementen 27 der Grundplatte 17.

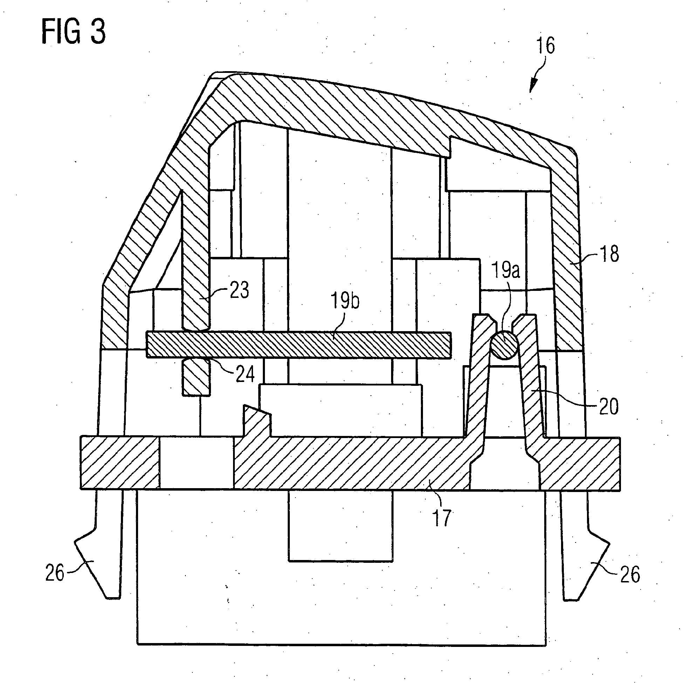

Figur 3 zeigt einen Querschnitt durch die längliche Taste 16 im montierten Zustand. Die Tastenkappe 18 ist auf die Grundplatte 17 aufgesetzt und mit dieser durch den Bügel 19 verbunden. Zusätzlich verhindern die Rastelemente 26 der Tastenkappe 18 ein Herausrutschen der Tastenkappe 18 aus der Grundplatte 17.

Der erste Bügelabschnitt 19a wird durch in der Figur 3 nicht gekennzeichnete federnde Gehäuseteile 21 spielfrei in dem ersten Lager 20 gehalten. Gleichzeitig steckt der zweite Bügelabschnitt 19b spielfrei in der Kerbe 24 des zweiten Lagers 23.

Um eine leichte Betätigung der Taste 16 zu ermöglichen, in der Abbildung entsprechend einer Bewegung der Tastenkappe 18 relativ zur Grundplatte 17 nach unten, weist die Kerbe 24 ein balliges Profil auf. Das ballige Profil der Kerbe 24 gewährleistet, dass der zweite Bügelabschnitt 19b stets spielfrei an dem zweiten Lager 23 der Tastenkappe 18 anliegt.

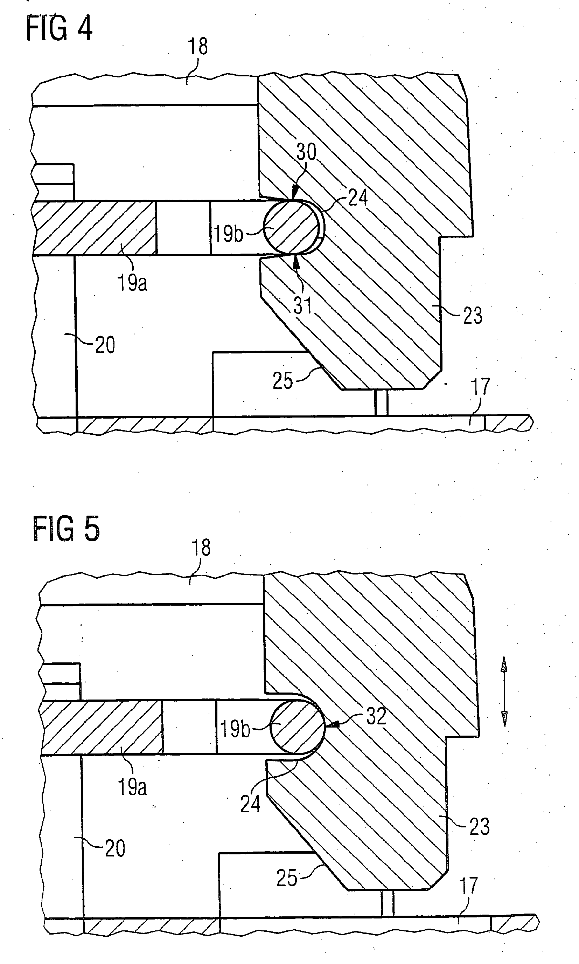

Figur 4 zeigt einen Längsschnitt durch ein vergrößertes zweites Lager 23 der Tastenkappe 18. Die Kerbe 24 des zweiten Lagers 23 weist in dem dargestellten Ausführungsbeispiel ein konisches Profil auf. Durch das konische Profil der Kerbe 24 ist gewährleistet, dass der gegenüber dem Lager 23 vorgespannte zweite Bügelabschnitt 19b den Rand der Kerbe 24 an zwei Auflagepunkten 30 und 31 berührt. Somit ist auch in diesem Ausführungsbeispiel der zweite Bügelabschnitt 19b stes spielfrei mit dem zweiten Lager 23 der Tastenkappe 18 verbunden.

Figur 5 zeigt einen vergrößerten Querschnitt durch eine weitere Ausführungsform des Lagers 23. Die Kerbe 24 des Lager 23 weist parallele Kerbenwände auf. Der Abstand der parallelen Kerbenwände ist dabei geringfügig größer als der Durchmesser des zweiten Bügelabschnitts 19b, so dass die Tastenkappe 18 in Pfeilrichtung bewegt werden kann. Durch die Vorspannung des zweiten Bügelabschnitts 19b gegenüber dem Lager 23 ist dennoch sicher gestellt, dass der zweite Bügelabschnitt 19b in einem Auflagepunkt 32 die Wand der Kerbe 24 stets berührt. Somit wird auch in diesem Ausführungsbeispiel eine Geräuschentwicklung durch den Bügel 19b gegenüber dem Lager 23 vermieden. Bei einer Auf- und Abbewegung der Tastenkappe 18 und damit des zweiten Lagers 23 in Richtung des dargestellten Pfeils gleitet der zweite Bügelabschnitt 19b an dem Radius der Kerbe 24 ab.

Andere Ausgestaltungen des Bügels 19, des ersten Lagers 20, des zweiten Lagers 23 sowie der Kerbe 24 sind möglich, solange gewährleistet ist, dass der Bügel 19 in den zugehörigen Lagern 20 und 23 stets spielfrei anliegt.

### Bezugszeichenliste:

- 1:: Tastaturgehäuse
- 2, 3, 4:: Gehäuseschächte
- 5:: Schwenkbügel
- 6, 7:: Verbindungselement
- 8, 9:: Bügelachse
- 10, 11:: Achsstutzen
- 12, 13:: Aufnahmeelement
- 14, 15:: Auflagerippe
- 16:: längliche Taste
- 17:: Grundplatte
- 18:: Tastenkappe
- 19:: Bügel
- 19a:: erster Bügelabschnitt
- 19b:: zweiter Bügelabschnitt
- 20:: erstes Lager
- 21:: federndes Gehäuseteil
- 22:: Auflager
- 23:: zweites Lager
- 24:: Kerbe
- 25:: Abschrägung
- 26:: Rastelement
- 27:: Gegenrastelement
- 28, 29:: Stößel
- 30, 31, 32:: Auflagepunkt

## Patentansprüche

1. Tastatur mit einem Tastaturgehäuse und einer Vielzahl von Tasten aufweisend jeweils einen Drucktaster und jeweils eine Tastenkappe, wobei wenigstens eine Taste (16) eine längliche Tastenkappe (18) aufweist, die über einen Bügel (19) mit dem Tastaturgehäuse (17) verbunden ist, **dadurch gekennzeichnet, dass** ein sich in Längsrichtung der länglichen Taste (16) erstreckender erster Bügelabschnitt (19a) in wenigstens zwei ersten Lagern (20) des Tastaturgehäuses (17) schwenkbar und spielfrei gelagert ist und zwei im wesentlichen dazu senkrecht abgebogene zweite Bügelabschnitte (19b) in zweiten Lagern (23) der Tastenkappe (18) vorgespannt aufgenommen sind.

2. Tastatur nach Anspruch 1, **dadurch gekennzeichnet, dass** das Tastaturgehäuse ein federndes Gehäuseteil (21) aufweist, welches den ersten Bügelabschnitt (19a) gegen Gegenlager der ersten Lager (20) drückt.

3. Tastatur nach Anspruch 1 oder 2, **dadurch gekennzeichnet, dass** die zweiten Lager (23) in der Tastenkappe (18) jeweils eine Kerbe (24) zur Aufnahme der zweiten Bügelabschnitte (19b) aufweisen, wobei die zweiten Bügelabschnitte durch die Vorspannung spielfrei an den Kerben (24) anliegen.

4. Tastatur nach Anspruch 3, **dadurch gekennzeichnet, dass** die Kerbe (24) ein balliges Profil aufweist, sodass die zweiten Bügelabschnitte (19b) an wenigstens einem Punkt der Kerbe (24) anliegen.

5. Tastatur nach Anspruch 3 oder 4, **dadurch gekennzeichnet, dass** die Kerbe (24) konisch zuläuft, sodass die zweiten Bügelabschnitte (19b) an wenigstens zwei Punkten (30, 31) der Kerbe (24) anliegen.

6. Tastatur nach Anspruch 3 oder 4, **dadurch gekennzeichnet, dass** die Kerbe (24) parallele Wände mit einem Abstand größer als der Durchmesser der zweiten Bügelabschnitte (19b) aufweist, sodass die zweiten Bügelabschnitte (19b) an einem Punkt (32) der Kerbe (24) anliegen.

7. Tastatur nach einem der Ansprüche 1 bis 6, **dadurch gekennzeichnet, dass** die Tastenkappe (18) abgeschrägte Führungselemente (25) aufweist, durch welche die zweiten Bügelabschnitte (19b) beim Einsetzen der länglichen Tastenkappe (18) vorgespannt werden und mit den zweiten Lagern (23) verrasten.
